# FASCICULE DE BREVET EUROPEEN

(11) **EP 3 060 441 B1**
(45) Date de publication et mention de la délivrance du brevet: **01.09.2021**
(21) Numéro de dépôt: 14790224.1
(22) Date de dépôt: 07.10.2014
(51) Int. Cl.: B60W 10/30, B60T 17/02, B60T 13/52

(54) **GESTION DES SEUILS DE PRESSION DIFFÉRENTIELLE D'UNE POMPE A VIDE RELIÉE A UN SYSTÈME DE FREINAGE DE VÉHICULE AUTOMOBILE**
BESTIMMUNG VON DRUCKSCHWELLWERTEN FÜR EINE VAKUUMPUMPE IN EINEM FAHRZEUGBREMSSYSTEM
DETERMINATION OF PRESSURE THRESHOLDS FOR A VACUUM PUMP USED IN A VEHICLE BRAKE SYSTEM

(30) Priorité: 23.10.2013 FR 1360332
(43) Date de publication de la demande: 31.08.2016
(73) Titulaire: Renault S.A.S., 92100 Boulogne-Billancourt (FR)
(72) Inventeur: PERAIN, Frédéric, F-91300 Massy (FR); GARNIER, Pierre, F-78950 Gambais (FR); CONSTANT, Sophie, F-92350 Le Plessis Robinson (FR); FELAH, Borhen, F-78180 Montigny le Bretonneux (FR)
(86) Numéro de dépôt international: PCT/FR2014/052535
(87) Numéro de publication internationale: WO 2015/059383

(56) Documents cités:
- EP-A2- 1 681 219
- FR-A1- 2 877 629
- GB-A- 2 492 404
- None

## Description

### Domaine technique de l'invention

L'invention concerne un procédé de gestion d'une pompe à vide reliée à un système de freinage d'un véhicule automobile, comprenant une étape d'utilisation d'une unité électronique de commande reliée à la pompe à vide.

L'invention a pour objet également un système de gestion de la pompe à vide et un véhicule comprenant un tel système, le système comprenant une unité électronique de commande incluant des éléments matériels et/ou logiciels mettant en œuvre le procédé de gestion.

### État de la technique

Les systèmes de freinage automobiles comportent d'une part un système hydraulique sollicitant les organes de freinage du véhicule par un actionnement d'une pédale de frein par le conducteur et d'autre part un dispositif d'assistance et d'amplification qui permet une amplification entre les efforts appliqués à la pédale de frein et les efforts sollicitant les organes de freinage.

Ainsi, le document DE10008795A1 décrit une solution permettant d'amplifier la pression de freinage générée par appui sur la pédale de frein qui exploite une technologie connue d'utilisation de vide aéraulique générée généralement par la dépression à l'admission du moteur thermique du véhicule, comme c'est le cas par exemple dans le document EP1071873A1.

En cas d'insuffisance ou d'absence de dépression obtenue à partir du moteur thermique du véhicule (ce qui est susceptible d'être le cas par exemple avec un véhicule à traction purement électrique ou à traction hybride), le dispositif d'assistance et d'amplification met généralement en œuvre une pompe à vide, par exemple à l'image de la solution décrite dans le document FR2877629A1. Autrement dit, le dispositif d'assistance et d'amplification peut classiquement comprendre une source de dépression incluant une pompe à vide reliée au système de freinage.

L'utilisation d'une pompe à vide reliée au système de freinage, en raison d'un besoin d'efficacité optimale du système de freinage, induit l'introduction d'un problème général lié à cette pompe à vide qui réside dans le choix du seuil supérieur de pression différentielle commandant l'arrêt du fonctionnement de la pompe à vide, dans le choix du seuil inférieur de pression différentielle commandant la mise en marche de la pompe à vide et éventuellement dans le choix du seuil de pression différentielle signalant des alertes représentatives de défauts de fonctionnement. Du choix de ces seuils de pression différentielle dépend directement le fonctionnement du système de freinage : il convient de trouver un compromis entre d'une part le besoin d'une pression différentielle suffisante et certaine pour assurer la fonction d'assistance et d'amplification de manière fiable et adaptée et d'autre part le besoin d'éviter un fonctionnement intempestif de la pompe à vide, source de surconsommation et de risques de détérioration prématurée de la pompe à vide.

Actuellement, par exemple de la manière décrite dans le document FR2877629A1 mentionné ci-dessus, le seuil de mise en route de la pompe à vide est fixe et est étalonné pour une altitude correspondant au niveau de la mer.

Un autre procédé de gestion d'une pompe à vide est connu de GB 2492404 A.

Il a déjà été imaginé adapter les seuils d'activation et de désactivation de la pompe à vide en fonction de la vitesse du véhicule. Si cette approche améliore les situations précédentes, il reste que dans certaines situations particulières non prises en compte pour leur détermination, ces seuils deviennent peu adaptés auxdites conditions et induisent un manque d'efficacité de freinage et/ou l'émission d'alertes intempestives de dysfonctionnement.

Il existe un besoin d'optimiser la détermination des seuils de fonctionnement de la pompe à vide d'une manière permettant de répondre simultanément au besoin d'une pression différentielle suffisante et certaine pour assurer la fonction d'assistance et d'amplification de manière fiable et adaptée et au besoin d'éviter un fonctionnement intempestif de la pompe à vide, et ce indépendamment des situations rencontrées par le véhicule.

### Objet de l'invention

Le but de la présente invention est de proposer une solution de gestion d'une pompe à vide reliée à un système de freinage d'un véhicule automobile qui remédie aux inconvénients listés ci-dessus.

Ce but peut être atteint grâce à un procédé de gestion d'une pompe à vide reliée à un système de freinage d'un véhicule automobile, comprenant une étape d'utilisation d'une unité électronique de commande reliée à la pompe à vide et une étape de détermination d'au moins deux seuils de pression différentielle associés à la pompe à vide: un premier seuil de pression différentielle commandant l'arrêt du fonctionnement de la pompe à vide, un deuxième seuil de pression différentielle commandant la mise en marche de la pompe à vide et, éventuellement, un troisième seuil de pression différentielle inférieur au deuxième seuil et signalant des alertes représentatives de défauts de fonctionnement, en tenant compte d'un premier ensemble de données représentatives de la détection ou non d'une situation de freinage répétitif et/ou d'un deuxième ensemble de données représentatives de l'altitude occupée par le véhicule.

Le procédé de gestion peut comprendre une étape de modification au moins des premier et deuxième seuils de pression différentielle, éventuellement du troisième seuil de pression différentielle, de façon à ce qu'à une altitude donnée, au moins les premier et deuxième seuils de pression différentielle, éventuellement le troisième seuil de pression différentielle, évoluent par paliers croissants lorsque la vitesse de déplacement du véhicule augmente, la transition entre deux paliers successifs intervenant au niveau de seuils de vitesse prédéterminés et enregistrés dans l'unité électronique de commande.

Selon un mode de réalisation, cette étape de modification est inhibée lorsque le premier ensemble de données est représentatif d'une détection de la présence d'une situation de freinage répétitif, de sorte qu'au moins les premier et deuxième seuils de pression différentielle, éventuellement le troisième seuil de pression différentielle, sont maintenus constants par l'unité électronique de commande indépendamment de la vitesse de déplacement du véhicule.

De préférence, cette étape de modification est en outre modulée en fonction du deuxième ensemble de données. Ainsi, à une vitesse de déplacement donnée du véhicule, il peut être fait en sorte qu'au moins les premier et deuxième seuils de pression différentielle, éventuellement le troisième seuil de pression différentielle, évoluent de manière croissante en fonction de l'altitude occupée par le véhicule.

A une vitesse de déplacement donnée du véhicule, au moins les premier et deuxième seuils de pression différentielle, éventuellement le troisième seuil de pression différentielle, peuvent évoluer par paliers croissants lorsque l'altitude occupée par le véhicule augmente, la transition entre deux paliers successifs intervenant au niveau de seuils d'altitude prédéterminés et enregistrés dans l'unité électronique de commande.

Selon un mode de réalisation, au niveau de chaque seuil d'altitude, un hystérésis est mis en œuvre de sorte que :
- le passage d'un palier au palier directement inférieur lorsque l'altitude décroit est appliqué au moment où l'altitude occupée par le véhicule est inférieure audit seuil d'altitude et où la différence entre ledit seuil d'altitude et l'altitude occupée par le véhicule devient supérieure à une première valeur prédéterminée,
- le passage d'un palier au palier directement supérieur lorsque l'altitude augmente est appliqué au moment où l'altitude occupée par le véhicule est supérieure audit seuil d'altitude et où la différence entre l'altitude occupée par le véhicule et ledit seuil d'altitude devient supérieure à une deuxième valeur prédéterminée, éventuellement égale à ladite première valeur prédéterminée.

Un système de gestion d'une pompe à vide reliée à un système de freinage d'un véhicule, peut comprendre une unité électronique de commande incluant des éléments matériels et/ou logiciels mettant en œuvre ce procédé de gestion.

Notamment, le système peut comprendre un élément de détection de la présence ou non d'une situation de freinage répétitif fournissant à l'unité électronique de commande le premier ensemble de données et/ou un élément d'évaluation de l'altitude occupée par le véhicule et fournissant à l'unité électronique de commande le deuxième ensemble de données.

Un véhicule automobile peut comprendre un tel système de gestion, une pompe à vide associée à une réserve de dépression et gérée par le système de gestion, l'unité électronique de commande étant liée à la pompe à vide de sorte à mettre en marche la pompe à vide lorsque la différence entre la pression ambiante au véhicule et la pression de la réserve de dépression est inférieure ou égale au deuxième seuil de pression différentielle déterminé par l'unité électronique de commande et à arrêter le fonctionnement de la pompe à vide lorsque la différence entre la pression ambiante au véhicule et la pression de la réserve de pression est supérieure ou égale au premier seuil de pression différentielle déterminé par l'unité électronique de commande.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre les courbes C1 à C3 représentant l'évolution de trois seuils de pression différentielle (exprimés en mbar) liés à la pompe à vide, en fonction de la vitesse du véhicule (exprimée en km/h), à une première altitude et en cas d'absence de détection d'une situation de freinage répétitif,
- la figure 2 illustre les courbes C4 à C6 représentant l'évolution des trois seuils de pression différentielle (exprimés en mbar) en fonction de la vitesse du véhicule (exprimée en km/h), à la première altitude, en cas de présence de détection d'une situation de freinage répétitif,

- la figure 3 illustre les courbes C7 à C9 représentant l'évolution des trois seuils de pression différentielle (exprimés en mbar) en fonction de la vitesse du véhicule (exprimée en km/h), à une deuxième altitude inférieure à la première altitude et en cas d'absence de détection d'une situation de freinage répétitif,
- la figure 4 illustre les courbes C10 à C12 représentant l'évolution des trois seuils de pression différentielle (exprimés en mbar) en fonction de la vitesse du véhicule (exprimée en km/h), à une troisième altitude supérieure à la première altitude et en cas d'absence de détection d'une situation de freinage répétitif,
- la figure 5 illustre les courbes C13 à C15 représentant l'évolution des trois seuils de pression différentielle (exprimés en mbar) liés à la pompe à vide en fonction de l'altitude (exprimée en m) occupée par le véhicule, à une vitesse donnée du véhicule,
- et la figure 6 illustre en détails le phénomène d'hystérésis mis en œuvre pour la courbe C13 de la figure 5 à proximité du seuil d'altitude S1 visible sur la figure 5.

### Description de modes préférentiels de l'invention

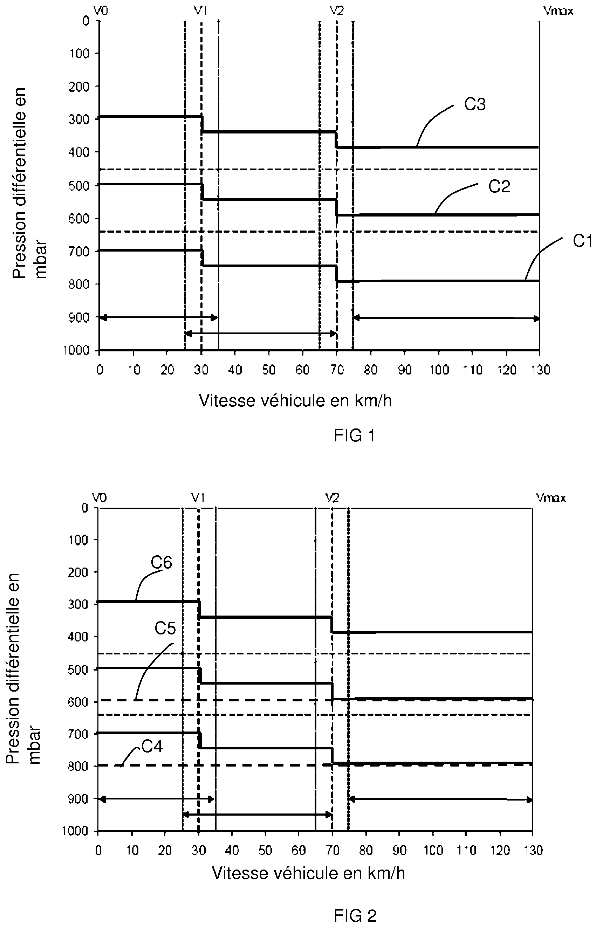

En référence aux figures 1 à 6, l'invention concerne un procédé de gestion d'une pompe à vide reliée à un système de freinage d'un véhicule automobile, ce procédé comprenant une étape d'utilisation d'une unité électronique de commande reliée à la pompe à vide et pilotant la pompe à vide. Elle concerne aussi un système de gestion de la pompe à vide, comprenant cette unité électronique de commande qui est munie d'éléments matériels et/ou logiciels mettant en œuvre le procédé de gestion.

De manière générale, le procédé comprend une étape de détermination d'au moins un seuil de pression différentielle associé à la pompe à vide en tenant compte d'un premier ensemble de données représentatives de la détection ou non d'une situation de freinage répétitif et/ou d'un deuxième ensemble de données représentatives de l'altitude occupée par le véhicule. Ledit au moins un seuil de pression différentielle est choisi parmi :
- un premier seuil de pression différentielle commandant l'arrêt du fonctionnement de la pompe à vide ; il s'agit d'un seuil supérieur,
- un deuxième seuil de pression différentielle commandant la mise en marche de la pompe à vide et inférieur au premier seuil ; il s'agit d'un seuil inférieur,
- et un troisième seuil de pression différentielle inférieur au deuxième seuil et signalant des alertes représentatives de défauts de fonctionnement.

Autrement dit, lorsque la pression différentielle est supérieure au premier seuil de pression différentielle, l'unité électronique de commande pilote l'arrêt du fonctionnement de la pompe à vide. Lorsque la pression différentielle est inférieure au deuxième seuil de pression différentielle, l'unité électronique commande la mise en marche de la pompe à vide. Lorsque la pression différentielle est inférieure au troisième seuil de pression différentielle, l'unité électronique commande l'arrêt du fonctionnement de la pompe à vide et signale des alertes représentatives de défauts de fonctionnement de la pompe à vide et/ou du système de freinage.

Un véhicule automobile comprendra donc un tel système de gestion, une pompe à vide associée à une réserve de dépression et gérée par le système de gestion. L'unité électronique de commande est liée à la pompe à vide et la pilote de sorte à mettre en marche la pompe à vide lorsque la différence entre la pression ambiante au véhicule et la pression de la réserve de dépression est inférieure ou égale au deuxième seuil de pression différentielle déterminé par l'unité électronique de commande et à arrêter le fonctionnement de la pompe à vide lorsque la différence entre la pression ambiante au véhicule et la pression de la réserve de pression est supérieure ou égale au premier seuil de pression différentielle déterminé par l'unité électronique de commande.

Le système de gestion pourra notamment comprendre un élément de détection de la présence ou non d'une situation de freinage répétitif fournissant à l'unité électronique de commande le premier ensemble de données et/ou un élément d'évaluation de l'altitude occupée par le véhicule et fournissant à l'unité électronique de commande le deuxième ensemble de données. Des exemples de tels éléments sont décrits plus loin.

Par ce biais, les premier et deuxième seuils de pression différentielle, voire le troisième seuil de pression différentielle, associés au fonctionnement de la pompe à vide, sont avantageusement adaptés :
- en fonction de l'altitude rencontrée par le véhicule,
- et/ou au moment où la situation de freinage répétitif est rencontrée.

Par « situation de freinage répétitif », il convient d'entendre dans ce document une situation détectée si un nombre d'appui sur la pédale de freinage par le conducteur, notamment avec une force d'appui supérieure à un seuil d'effort donné, dans une fenêtre temporelle glissante donnée, est supérieur à un nombre prédéterminé.

Il est connu que la pression atmosphérique diminue en même temps que l'altitude augmente, le différentiel de pression diminuant en conséquence. Dans l'art antérieur, des alertes à destination du conducteur sont émises à chaque fois que l'altitude est telle que le différentiel de pression réel devient inférieur au troisième seuil de pression différentielle et l'efficacité de freinage diminue également en raison du fait que les premier et deuxième seuils de pression différentielle sont fixes. Grâce à la stratégie de gestion décrite ici, il est possible d'éviter l'émission de ces alertes à destination du conducteur en raison d'une simple augmentation d'altitude et le seuil de mise en route de la pompe à vide, c'est-à-dire notamment le deuxième seuil de pression différentielle, est rehaussé afin de conserver une différence de pression suffisante entre la pression de la chambre vide et la pression de la chambre à l'atmosphère ambiante.

D'autre part, avec une stratégie selon l'art antérieur, l'assistance de freinage est susceptible de manquer de niveau de vide durant une situation de freinage répétitif aussi connu sous le nom de procédure dite « essai freinage répétitif ». Pour y remédier, la stratégie de gestion décrite ici prévoit très avantageusement la possibilité d'un couplage entre la reconnaissance de la procédure « essai freinage répétitif » à la stratégie de mise en route de la pompe à vide.

La procédure « essai freinage répétitif » est une procédure standard de caractérisation de l'endurance thermique du système de freinage d'un véhicule. Elle consiste à effectuer des enchaînements de freinages appuyés dans des conditions bien définies (vitesse de début de freinage, vitesse de fin de freinage, décélération, intervalle entre les freinages ...). Il existe plusieurs critères d'évaluation de cette caractérisation sur véhicule, dont la course de la pédale/l'effort de la pédale nécessaire pour atteindre la décélération exigée par la procédure ainsi que la distance d'arrêt. La présente stratégie de gestion des seuils d'activation et de désactivation de la pompe à vide permet de détecter ces situations de freinage sévères et de générer un niveau de vide suffisant pour atteindre de meilleures performances durant cet essai. Le principe de la stratégie de détection de ces situations décrite ci-dessus consiste à détecter un enchaînement de freinages (intervalle entre les activations du contacteur pédale de frein, niveau de pression hydraulique atteint pour chaque coup de frein ...).

Le procédé comprend une étape de modification au moins des premier et deuxième seuils de pression différentielle, éventuellement du troisième seuil de pression différentielle, en fonction de la vitesse de déplacement du véhicule. La figure 1 illustre les courbes C1 à C3 qui représentent l'évolution respectivement des premier, deuxième et troisième seuils de pression différentielle liés à la pompe à vide, en fonction de la vitesse du véhicule, à une première altitude occupée par le véhicule et en cas d'absence de détection d'une situation de freinage répétitif. La vitesse du véhicule évolue entre une vitesse minimale V0 (par exemple 0 km/h) et une vitesse maximale Vmax (par exemple 200 km/h). La première altitude est par exemple sensiblement égale à 1500 mètres.

Comme illustré sur la figure 1, à une altitude donnée telle que par exemple ladite première altitude, au moins les premier et deuxième seuils de pression différentielle, éventuellement le troisième seuil de pression différentielle, évoluent chacun par paliers constants croissants lorsque la vitesse de déplacement du véhicule augmente. La transition entre deux paliers successifs intervient au niveau de seuils de vitesse prédéterminés et enregistrés dans l'unité électronique de commande.

La figure 1 illustre le cas particulier mettant en œuvre deux tels seuils de vitesse prédéterminés, repérés V1 et V2. Chacun des premier, deuxième et troisième seuils de pression différentielle évolue selon trois paliers croissants délimités deux à deux par les seuils de vitesse V1, V2. C'est ce que représente chacune des courbes C1, C2 et C3. Le premier seuil de pression différentielle étant supérieur au deuxième seuil de pression différentielle qui est lui-même supérieur au troisième seuil de pression différentielle, la courbe C1 présente des valeurs supérieures à celles de la courbe C2, laquelle présente des valeurs supérieures à celles de la courbe C3.

Il reste possible d'envisager toute autre relation entre les seuils de pression différentielle et la vitesse du véhicule, par exemple un nombre différent de paliers et un nombre différent de seuils de vitesse. Il est également envisageable de prévoir que les seuils de vitesse associés à un seuil de pression différentielle donné soient différents des seuils de vitesse associés à un autre seuil de pression différentielle.

La figure 2 représente ensuite le fait que la détermination d'au moins un seuil de pression différentielle associé à la pompe à vide choisi parmi le premier seuil de pression différentielle, le deuxième seuil de pression différentielle et le troisième seuil de pression différentielle, tient compte du premier ensemble de données représentatives de la détection ou non d'une situation de freinage répétitif.

La figure 2 illustre ainsi les courbes C4 à C6 qui représentent l'évolution respectivement des premier, deuxième et troisième seuils de pression différentielle en fonction de la vitesse du véhicule, à la première altitude évoquée pour la figure 1, mais en cas de présence de détection d'une situation de freinage répétitif contrairement à la figure 1. Dans le mode de réalisation particulier seuls les premier et deuxième seuils de pression différentielle sont modifiés entre la figure 1 et la figure 2 de sorte que la courbe C6 de la figure 2 est identique à la courbe C3 de la figure 1. Mais le troisième seuil de pression différentielle pourrait également être modifié.

En référence à la figure 2, l'étape de modification des seuils de pression différentielle en fonction de la vitesse du véhicule décrite en relation avec la figure 1 est inhibée lorsque le premier ensemble de données est représentatif d'une détection de la présence d'une situation de freinage répétitif, de sorte qu'au moins les premier et deuxième seuils de pression différentielle, éventuellement le troisième seuil de pression différentielle, sont maintenus constants par l'unité électronique de commande indépendamment de la vitesse de déplacement du véhicule. C'est pourquoi sur la figure 2, les courbes C4 et C5 sont des droites constantes et horizontales.

Le principe de cette stratégie fonction de la détection ou non d'une situation de freinage répétitif, croisée avec la stratégie de modulation en fonction de la vitesse, prévoit donc d'adapter les seuils d'activation et de désactivation de la pompe à vide dans le cas d'un freinage répétitif. Ainsi, les performances du système de freinage sont améliorées.

La stratégie de détection d'une situation de freinage répétitif est classiquement disponible dans le contrôleur de stabilité électronique du véhicule. Cette information peut être mise à disposition de l'unité électronique de commande pour l'utiliser dans la stratégie d'adaptation des seuils de pression différentielle de la pompe à vide, ou bien elle peut être reconstruite à partir d'informations disponibles telles que le contrôle du contacteur de la pédale de frein, la pression de freinage, la vitesse de véhicule.

Une fois la situation de freinage répétitif détectée, il est possible d'adapter les seuils de pression différentielle, par exemple les seuils d'activation et de désactivation de la pompe à vide, pour atteindre de meilleures performances du système de freinage comme illustré sur la figure 2.

En résumé, l'unité électronique de commande adopte le premier seuil de pression différentielle selon la courbe C1, le deuxième seuil de pression différentielle selon la courbe C2 et le troisième seuil de pression différentielle selon la courbe C3, tant qu'une situation de freinage répétitif n'est pas détectée. Par contre, lorsqu'une situation de freinage répétitif est détectée, l'unité électronique de commande adopte le premier seuil de pression différentielle constant en fonction de la vitesse selon la courbe C4, le deuxième seuil de pression différentielle constant en fonction de la vitesse selon la courbe C5 et le troisième seuil de pression différentielle selon la courbe C6 par exemple identique à la courbe C3.

De manière séparée ou combinée à la stratégie de détermination des seuils de pression différentielle tenant compte du premier ensemble de données précédemment décrite, l'étape de modification des seuils de pression différentielle en fonction de la vitesse du véhicule est modulée en fonction du deuxième ensemble de données.

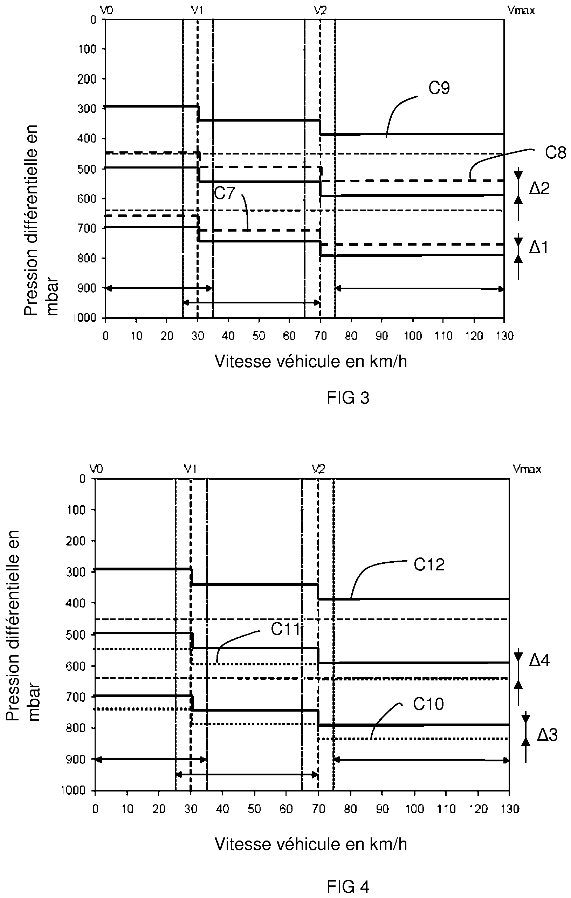

Les figures 3 à 6 illustrent ainsi que la détermination d'au moins un seuil de pression différentielle associé à la pompe à vide choisi parmi le premier seuil de pression différentielle, le deuxième seuil de pression différentielle et le troisième seuil de pression différentielle, tient compte du deuxième ensemble de données représentatives de l'altitude occupée par le véhicule.

En complément ou en substitution, cette stratégie prévoit donc d'adapter les seuils de pression différentielle, par exemple les seuils d'activation et de désactivation de la pompe à vide, en fonction de l'altitude occupée par le véhicule. Etant donné que la pression atmosphérique varie en fonction de l'altitude, le niveau de dépression générée par la pompe à vide peut être adapté en conséquence tout en restant à iso performance du système de freinage. Ainsi, la pompe à vide est sollicitée :
- moins longtemps à faible altitude que dans l'art antérieur, induisant un gain en durée de vie et en consommation électrique,
- ou plus longtemps à des niveaux d'altitude élevés que dans l'art antérieur afin d'améliorer les performances du système de freinage.

L'information concernant le niveau d'altitude du véhicule peut être fournie par un dispositif de positionnement tel qu'un GPS (pour « Global Positioning System » en terminologie anglo-saxonne) via le réseau multimédia du véhicule. Etant donné le niveau parfois faible de fiabilité de cette information en raison par exemple de discontinuités de la réception, cette information n'est préférentiellement utilisée que pour un besoin de confort. Le système est configuré de sorte à assurer les performances sécuritaires en l'absence de cette information.

La figure 3 illustre les courbes C7 à C9 qui représentent l'évolution respectivement des premier, deuxième et troisième seuils de pression différentielle en fonction de la vitesse du véhicule, à une deuxième altitude inférieure à la première altitude et en cas d'absence de détection d'une situation de freinage répétitif. Dans le mode de réalisation particulier seuls les premier et deuxième seuils de pression différentielle sont modifiés entre la figure 1 et la figure 3 de sorte que la courbe C9 de la figure 3 est identique à la courbe C3 de la figure 1. Mais le troisième seuil de pression différentielle pourrait également être modifié.

Ainsi, en référence à la figure 3, au moins les premier et deuxième seuils de pression différentielle sont adaptés en fonction de la deuxième altitude, correspondant par exemple sensiblement au niveau de la mer : par rapport à la figure 1, ces deux seuils de pression différentielle subissent un décrément prédéterminé Δ1, Δ2, fonction de l'altitude. Le premier seuil de pression différentielle selon la courbe C7 de la figure 3, établi pour la deuxième altitude, est diminué d'un décrément Δ1 par rapport au premier seuil de pression selon la courbe C1 de la figure 1 établi pour la première altitude. Le deuxième seuil de pression différentielle selon la courbe C8 de la figure 3, établi pour la deuxième altitude, est diminué d'un décrément Δ2 par rapport au deuxième seuil de pression selon la courbe C2 de la figure 1 établi pour la première altitude. La valeur du décrément Δ1 peut être égal ou non à la valeur du décrément Δ2.

La figure 4 illustre les courbes C10 à C12 qui représentent l'évolution respectivement des premier, deuxième et troisième seuils de pression différentielle en fonction de la vitesse du véhicule, à une troisième altitude supérieure à la première altitude et en cas d'absence de détection d'une situation de freinage répétitif. Dans le mode de réalisation particulier seuls les premier et deuxième seuils de pression différentielle sont modifiés entre la figure 1 et la figure 4 de sorte que la courbe C12 de la figure 4 est identique à la courbe C3 de la figure 1. Mais le troisième seuil de pression différentielle pourrait également être modifié.

Ainsi, en référence à la figure 4, au moins les premier et deuxième seuils de pression différentielle sont adaptés en fonction de la troisième altitude, correspondant par exemple à une altitude sensiblement de 2500 mètres : par rapport à la figure 1, ces deux seuils de pression différentielle subissent un incrément prédéterminé Δ3, Δ4, fonction de l'altitude. Le premier seuil de pression différentielle selon la courbe C10 de la figure 4, établi pour la troisième altitude, est augmenté de l'incrément Δ3 par rapport au premier seuil de pression selon la courbe C1 de la figure 1 établi pour la première altitude. Le deuxième seuil de pression différentielle selon la courbe C11 de la figure 4, établi pour la troisième altitude, est augmenté d'un incrément Δ4 par rapport au deuxième seuil de pression selon la courbe C2 de la figure 1 établi pour la première altitude. La valeur du décrément Δ3 peut être égal ou non à la valeur du décrément Δ4.

En résumé, l'unité électronique de commande adopte de préférence le premier seuil de pression différentielle selon la courbe C1, le deuxième seuil de pression différentielle selon la courbe C2 et le troisième seuil de pression différentielle selon la courbe C3, tant que l'altitude est supérieure à un premier seuil d'altitude S1 compris entre ladite première altitude et ladite deuxième altitude et inférieure à un deuxième seuil d'altitude S2 compris entre ladite première altitude et ladite troisième altitude. Par contre, lorsque l'altitude réelle est inférieure au premier seuil d'altitude S1, l'unité électronique de commande adopte le premier seuil de pression différentielle en fonction de la vitesse selon la courbe C7, le deuxième seuil de pression différentielle en fonction de la vitesse selon la courbe C8 et le troisième seuil de pression différentielle selon la courbe C9 par exemple identique à la courbe C3. Lorsque l'altitude réelle est supérieure au deuxième seuil d'altitude S2, l'unité électronique de commande adopte le premier seuil de pression différentielle en fonction de la vitesse selon la courbe C10, le deuxième seuil de pression différentielle en fonction de la vitesse selon la courbe C11 et le troisième seuil de pression différentielle selon la courbe C12 par exemple identique à la courbe C3.

L'information concernant l'altitude à laquelle se situe le véhicule est acquise préférentiellement grâce au système multimédia qui utilise ou qui a à sa disposition cette information.

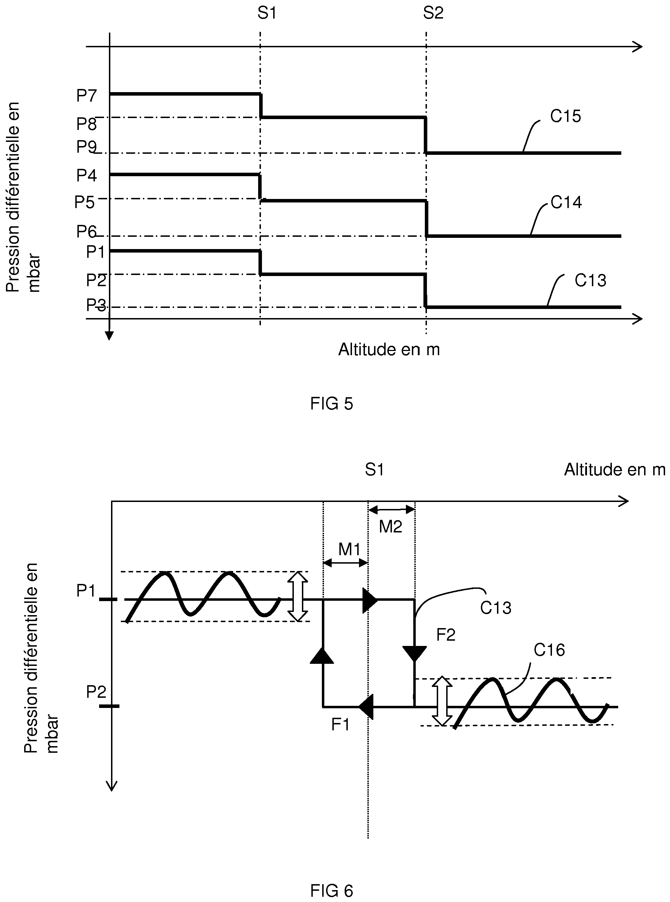

Dans une première approche, il est possible de prévoir que la plage totale d'altitude dans laquelle le véhicule est susceptible d'évoluer (une telle plage pouvant être définie comme variant entre une altitude minimale de 0 mètre par rapport au niveau de la mer et une altitude maximale de 4000 mètres au dessus du niveau de la mer) soit divisée en une pluralité de sections successives délimitées par des seuils d'altitude. Le nombre de sections et le nombre de seuils d'altitude peuvent varier suivant la précision recherchée. L'exemple particulier et non limitatif illustré en relation avec la figure 5 prévoit que la plage totale 0-4000 m soit divisée en trois sections par l'intermédiaire de deux seuils S1 et S2 respectivement de 1000 m et 2000 m. Ainsi, la plage totale entre 0 et 4000 m est divisée en une première section variant entre 0 et 1000 m, une deuxième section variant entre 1000 et 2000 m, et une troisième section variant entre 2000 et 4000 m.

De manière générale, à une vitesse de déplacement donnée du véhicule, au moins les premier et deuxième seuils de pression différentielle, éventuellement le troisième seuil de pression différentielle, évoluent de manière croissante en fonction de l'altitude occupée par le véhicule. Selon un mode de réalisation tel qu'illustré à la figure 5, à une vitesse de déplacement donnée du véhicule, au moins les premier et deuxième seuils de pression différentielle, éventuellement le troisième seuil de pression différentielle, évoluent par paliers constants croissants lorsque l'altitude (représentée en abscisse) occupée par le véhicule augmente, la transition entre deux paliers successifs intervenant au niveau de seuils d'altitude S1, S2 prédéterminés et enregistrés dans l'unité électronique de commande.

La figure 5 illustre les courbes C13 à C15 représentant l'évolution des trois seuils de pression différentielle liés à la pompe à vide en fonction de l'altitude occupée par le véhicule, à une vitesse donnée du véhicule. Plus précisément, la courbe C13 représente l'évolution du premier seuil de pression différentielle, à une vitesse donnée du véhicule, en fonction de l'altitude occupée par le véhicule. La courbe C14 représente l'évolution du deuxième seuil de pression différentielle, à la même vitesse donnée du véhicule, en fonction de l'altitude occupée par le véhicule. La courbe C15 représente enfin l'évolution du troisième seuil de pression différentielle, à la même vitesse donnée du véhicule, en fonction de l'altitude occupée par le véhicule

Selon le mode de réalisation tel qu'illustré à la figure 5, à la vitesse de déplacement donnée du véhicule, le premier seuil de pression différentielle évolue par paliers croissants P1, P2, P3 lorsque l'altitude occupée par le véhicule augmente. Le premier palier P1 est occupé sur la première section qui varie entre 0 et 1000 m. Le deuxième palier P2 est occupé sur la deuxième section qui varie entre 1000 et 2000 m. Le troisième palier P3 est occupé sur la troisième section qui varie entre 2000 et 4000 m. La transition entre les paliers P1, P2 successifs intervient au niveau du seuil d'altitude S1. La transition entre les paliers P2, P3 successifs intervient au niveau du seuil d'altitude S2.

Selon le mode de réalisation tel qu'illustré à la figure 5, à la vitesse de déplacement donnée du véhicule, le deuxième seuil de pression différentielle évolue par paliers croissants P4, P5, P6 lorsque l'altitude occupée par le véhicule augmente. Le premier palier P4 est occupé sur la première section qui varie entre 0 et 1000 m. Le deuxième palier P5 est occupé sur la deuxième section qui varie entre 1000 et 2000 m. Le troisième palier P6 est occupé sur la troisième section qui varie entre 2000 et 4000 m. La transition entre les paliers P4, P5 successifs intervient au niveau du seuil d'altitude S1. La transition entre les paliers P5, P6 successifs intervient au niveau du seuil d'altitude S2.

Selon le mode de réalisation tel qu'illustré à la figure 5, à la vitesse de déplacement donnée du véhicule, le troisième seuil de pression différentielle évolue par paliers croissants P7, P8, P9 lorsque l'altitude occupée par le véhicule augmente. Le premier palier P7 est occupé sur la première section qui varie entre 0 et 1000 m. Le deuxième palier P8 est occupé sur la deuxième section qui varie entre 1000 et 2000 m. Le troisième palier P9 est occupé sur la troisième section qui varie entre 2000 et 4000 m. La transition entre les paliers P7, P8 successifs intervient au niveau du seuil d'altitude S1. La transition entre les paliers P8, P9 successifs intervient au niveau du seuil d'altitude S2.

Bien que sur la figure 5 les trois seuils de pression différentielle varient avec l'altitude, comme illustré par les courbes C13 à C15 en forme de créneaux à paliers successifs, il peut être prévu que seul l'un ou deux de ces trois seuils de pression différentielle présente une telle variation fonction de l'altitude occupée par le véhicule. Par ailleurs, les seuils d'altitude associés à un seuil de pression différentielle peuvent varier d'un seuil de pression différentielle à l'autre.

Les valeurs des seuils d'altitude sont de préférence des données variables qui pourront être adaptées en fonction du type de véhicule ou du marché de vente.

De manière générale, au niveau de chaque seuil d'altitude, un principe d'hystérésis peut avantageusement être mis en œuvre par l'unité électronique de commande de sorte que :
- le passage d'un palier au palier directement inférieur lorsque l'altitude décroit est appliqué au moment où l'altitude occupée par le véhicule est inférieure audit seuil d'altitude et où la différence entre ledit seuil d'altitude et l'altitude occupée par le véhicule devient supérieure à une première valeur prédéterminée,
- le passage d'un palier au palier directement supérieur lorsque l'altitude augmente est appliqué au moment où l'altitude occupée par le véhicule est supérieure audit seuil d'altitude et où la différence entre l'altitude occupée par le véhicule et ledit seuil d'altitude devient supérieure à une deuxième valeur prédéterminée, éventuellement égale à ladite première valeur prédéterminée.

Cette caractéristique a pour avantage de permettre d'éviter les discontinuités au moment du passage d'un palier à un autre pour chaque seuil de pression différentielle, au niveau de chaque seuil d'altitude.

La figure 6 illustre en détails le phénomène d'hystérésis mis en œuvre pour la courbe C13 de la figure 5, à proximité du premier seuil d'altitude S1. Ainsi, pour la courbe C13 associée au premier seuil de pression différentielle, un phénomène d'hystérésis est mis en œuvre au niveau du premier seuil d'altitude S1 de sorte que :
- le passage (en suivant les flèches F1) du palier P2 au palier P1 directement inférieur lorsque l'altitude décroit est appliqué au moment où l'altitude occupée par le véhicule est inférieure audit seuil d'altitude S1 et où la différence entre ledit seuil d'altitude S1 et l'altitude occupée par le véhicule devient supérieure à une première valeur prédéterminée M1,
- le passage (en suivant les flèches F2) d'un palier P1 au palier P2 directement supérieur lorsque l'altitude augmente est appliqué au moment où l'altitude occupée par le véhicule est supérieure audit seuil d'altitude S1 et où la différence entre l'altitude occupée par le véhicule et ledit seuil d'altitude S1 devient supérieure à une deuxième valeur prédéterminée M2.

La deuxième valeur prédéterminée M2 peut éventuellement être égale à la première valeur prédéterminée M1 mais M1 et M2 peuvent tout à fait présenter des valeurs différentes, par exemple en fonction de la valeur du seuil d'altitude correspondant et/ou en fonction de la courbe C13 à C15 considérée.

Tandis que la courbe C13 représente la variation du premier seuil de pression différentielle en fonction de l'altitude occupée par le véhicule, défini comme le seuil de pression différentielle commandant l'arrêt du fonctionnement de la pompe à vide, la courbe C16 sur la figure 6 représente l'évolution, en fonction de l'altitude occupée par le véhicule, du niveau réel de différentiel de dépression mesuré par un capteur du système de freinage auquel est lié la pompe à vide.

La figure 6 représente donc le cas particulier de la courbe C13, au niveau du premier seuil d'altitude S1, pour le passage du palier P1 au palier P2 ou réciproquement. Toutefois, pour cette courbe C13, le phénomène d'hystérésis est identique au deuxième seuil d'altitude S2 pour le passage du palier P2 au palier P3 ou réciproquement. De même, le phénomène d'hystérésis est identique pour la courbe C14, pour le passage du palier P4 au palier P5 ou réciproquement, au niveau du premier seuil d'altitude S1. De plus, le principe d'hystérésis est identique pour cette courbe C14 pour le passage du palier P5 au palier P6 ou réciproquement, au niveau du deuxième seuil d'altitude S2. De même, le principe d'hystérésis est identique pour la courbe C15, pour le passage du palier P7 au palier P8 ou réciproquement, au niveau du premier seuil d'altitude S1. De plus, le phénomène d'hystérésis est identique pour cette courbe C15 pour le passage du palier P9 au palier P8 ou réciproquement, au niveau du deuxième seuil d'altitude S2.

Il ressort de ce qui précède que l'altitude du véhicule peut être prise en compte dans la détermination et l'adaptation des seuils de pression différentielle, notamment des seuils de détection de mise en marche et/ou d'arrêt de la pompe à vide, voire du seuil de déclenchement d'alerte. L'unité électronique de commande fait l'acquisition des données relatives à l'altitude ou les détermine elle-même ; elle réalise la comparaison à chaque instant à selon une période déterminée entre l'altitude réelle et les seuils d'altitude qui y sont préenregistrés. De même, l'unité électronique de commande intègre dans sa mémoire les courbes C7 à C15.

Bien que pouvant être mises en œuvre séparément, la prise en compte de la détection ou non d'une situation de freinage répétitif et la prise en compte de l'altitude occupée par le véhicule peuvent être combinées pour la détermination des seuils de pression différentielle liés à la pompe à vide.

Il ressort de ce qui précède que la solution très avantageuse mise en œuvre dans ce document peut également être formulée de la manière suivante.

Il s'agit d'un procédé de gestion d'une pompe à vide reliée à un système de freinage d'un véhicule automobile, comprenant une étape d'utilisation d'une unité électronique de commande reliée à la pompe à vide pour mettre en œuvre une étape de détermination d'au moins un seuil de pression différentielle associé à la pompe à vide choisi parmi un premier seuil de pression différentielle commandant l'arrêt du fonctionnement de la pompe à vide, un deuxième seuil de pression différentielle commandant la mise en marche de la pompe à vide et un troisième seuil de pression différentielle inférieur au deuxième seuil et signalant des alertes représentatives de défauts de fonctionnement, ce procédé étant remarquable en ce qu'il comprend une étape de modification au moins des premier et deuxième seuils de pression différentielle, éventuellement du troisième seuil de pression différentielle, en fonction de la vitesse de déplacement du véhicule et en ce que ladite étape de modification est inhibée ou modulée en fonction d'au moins un ensemble de données représentatif d'une caractéristique différente de la vitesse du véhicule, notamment la détection ou non d'une situation de freinage répétitif et/ou l'altitude occupée par le véhicule.

Un avantage est que lorsque l'altitude reste modérée, la stratégie de gestion développée dans ce document permet un fonctionnement de la pompe à vide au juste nécessaire.

Un autre avantage est que la mise en route de la pompe à vide au plus juste permet au groupe motopropulseur de revoir ses stratégies de déclenchements des consommateurs. Cette logique se trouve dans l'unité électronique de commande qui pilote la pompe à vide et elle utilise l'information liée à l'altitude.

La stratégie mise en place dépend de la fiabilité de l'information altitude. En cas d'information erronée ou indisponible le seuil de pression différentielle adopté permet d'assurer la sécurité du véhicule quelque soit l'altitude ce qui peut limiter les gains sur la consommation lors de la mise en route de la pompe à vide. Le niveau de vide sera toujours optimum durant les freinages répétés qui sont consommateurs de la dépression.

## Revendications

1. Procédé de gestion d'une pompe à vide reliée à un système de freinage d'un véhicule automobile, comprenant :
- une étape d'utilisation d'une unité électronique de commande reliée à la pompe à vide,
- une étape de détermination d'au moins deux seuils de pression différentielle associés à la pompe à vide: un premier seuil de pression différentielle commandant l'arrêt du fonctionnement de la pompe à vide, un deuxième seuil de pression différentielle commandant la mise en marche de la pompe à vide et, éventuellement, un troisième seuil de pression différentielle inférieur au deuxième seuil et signalant des alertes représentatives de défauts de fonctionnement, en tenant compte d'un premier ensemble de données représentatives de la détection ou non d'une situation de freinage répétitif et/ou d'un deuxième ensemble de données représentatives de l'altitude occupée par le véhicule, **caractérisé en ce qu'**il comprend :
- une étape de modification au moins des premier et deuxième seuils de pression différentielle, éventuellement du troisième seuil de pression différentielle, de façon à ce qu'à une altitude donnée, au moins les premier et deuxième seuils de pression différentielle, éventuellement le troisième seuil de pression différentielle, évoluent par paliers croissants lorsque la vitesse de déplacement du véhicule augmente, la transition entre deux paliers successifs intervenant au niveau de seuils de vitesse prédéterminés et enregistrés dans l'unité électronique de commande.

2. Procédé de gestion selon la revendication 1, **caractérisé en ce que** ladite étape de modification est inhibée lorsque le premier ensemble de données est représentatif d'une détection de la présence d'une situation de freinage répétitif, de sorte qu'au moins les premier et deuxième seuils de pression différentielle, éventuellement le troisième seuil de pression différentielle, sont maintenus constants par l'unité électronique de commande indépendamment de la vitesse de déplacement du véhicule.

3. Procédé de gestion selon l'une quelconque des revendications 1 ou 2, **caractérisé en ce que** ladite étape de modification est modulée en fonction du deuxième ensemble de données.

4. Procédé de gestion selon l'une quelconque des revendications 1 à 3, **caractérisé en ce qu'**à une vitesse de déplacement donnée du véhicule, au moins les premier et deuxième seuils de pression différentielle, éventuellement le troisième seuil de pression différentielle, évoluent de manière croissante en fonction de l'altitude occupée par le véhicule.

5. Procédé de gestion selon la revendication 4, **caractérisé en ce qu'**à une vitesse de déplacement donnée du véhicule, au moins les premier et deuxième seuils de pression différentielle, éventuellement le troisième seuil de pression différentielle, évoluent par paliers croissants lorsque l'altitude occupée par le véhicule augmente, la transition entre deux paliers successifs intervenant au niveau de seuils d'altitude prédéterminés et enregistrés dans l'unité électronique de commande.

6. Procédé de gestion selon la revendication 5, **caractérisé en ce qu'**au niveau de chaque seuil d'altitude, un hystérésis est mis en œuvre de sorte que :
- le passage (F1) d'un palier (P2) au palier (P1) directement inférieur lorsque l'altitude décroit est appliqué au moment où l'altitude occupée par le véhicule est inférieure audit seuil d'altitude et où la différence entre ledit seuil d'altitude et l'altitude occupée par le véhicule devient supérieure à une première valeur (M1) prédéterminée,
- le passage (F2) d'un palier (P1) au palier (P2) directement supérieur lorsque l'altitude augmente est appliqué au moment où l'altitude occupée par le véhicule est supérieure audit seuil d'altitude et où la différence entre l'altitude occupée par le véhicule et ledit seuil d'altitude devient supérieure à une deuxième valeur (M2) prédéterminée, éventuellement égale à ladite première valeur (M1) prédéterminée.

7. Système de gestion d'une pompe à vide reliée à un système de freinage d'un véhicule, comprenant une unité électronique de commande incluant des éléments matériels et/ou logiciels mettant en œuvre le procédé de gestion selon l'une quelconque des revendications précédentes.

8. Système de gestion selon la revendication 7, **caractérisé en ce qu'**il comprend un élément de détection de la présence ou non d'une situation de freinage répétitif fournissant à l'unité électronique de commande le premier ensemble de données et/ou un élément d'évaluation de l'altitude occupée par le véhicule et fournissant à l'unité électronique de commande le deuxième ensemble de données.

9. Véhicule automobile comprenant un système de gestion selon l'une des revendications 7 ou 8, une pompe à vide associée à une réserve de dépression et gérée par le système de gestion, l'unité électronique de commande étant liée à la pompe à vide de sorte à mettre en marche la pompe à vide lorsque la différence entre la pression ambiante au véhicule et la pression de la réserve de dépression est inférieure ou égale au deuxième seuil de pression différentielle déterminé par l'unité électronique de commande et à arrêter le fonctionnement de la pompe à vide lorsque la différence entre la pression ambiante au véhicule et la pression de la réserve de pression est supérieure ou égale au premier seuil de pression différentielle déterminé par l'unité électronique de commande.

## Patentansprüche

1. Verfahren zur Verwaltung einer Vakuumpumpe, die mit einem Bremssystem eines Kraftfahrzeugs verbunden ist, umfassend:
- einen Schritt des Verwendens einer mit der Vakuumpumpe verbundenen elektronischen Steuereinheit,
- einen Schritt des Bestimmens von mindestens zwei der Vakuumpumpe zugeordneten Differenzdruck-Schwellenwerten: eines ersten Differenzdruck-Schwellenwerts, der das Stoppen des Betriebs der Vakuumpumpe steuert, eines zweiten Differenzdruck-Schwellenwerts, der das Einschalten der Vakuumpumpe steuert, und gegebenenfalls eines dritten Differenzdruck-Schwellenwerts, der geringer als der zweite Schwellenwert ist und für Betriebsstörungen repräsentative Warnungen meldet, wobei ein erster Satz Daten, die für die Erkennung oder Nichterkennung einer Situation mit wiederholter Bremsung repräsentativ sind, und/oder ein zweiter Satz Daten, die für die vom Fahrzeug eingenommene Höhe repräsentativ sind, berücksichtigt wird bzw. werden, **dadurch gekennzeichnet, dass** es umfasst:
- einen Schritt des Veränderns mindestens des ersten und des zweiten Differenzdruck-Schwellenwerts, gegebenenfalls des dritten Differenzdruck-Schwellenwerts, so dass sich bei einer gegebenen Höhe mindestens der erste und der zweite Differenzdruck-Schwellenwert, gegebenenfalls der dritte Differenzdruck-Schwellenwert, in steigenden Stufen ändern, wenn die Fahrgeschwindigkeit des Fahrzeugs zunimmt, wobei der Übergang zwischen zwei aufeinander folgenden Stufen bei vorbestimmten und in der elektronischen Steuereinheit gespeicherten Geschwindigkeitsschwellenwerten erfolgt.

2. Verwaltungsverfahren nach Anspruch 1, **dadurch gekennzeichnet, dass** der Schritt des Veränderns blockiert wird, wenn der erste Datensatz für eine Erkennung des Vorliegens einer Situation mit wiederholter Bremsung repräsentativ ist, so dass mindestens der erste und der zweite Differenzdruck-Schwellenwert, gegebenenfalls der dritte Differenzdruck-Schwellenwert, von der elektronischen Steuereinheit unabhängig von der Fahrgeschwindigkeit des Fahrzeugs konstant gehalten werden.

3. Verwaltungsverfahren nach einem der Ansprüche 1 oder 2, **dadurch gekennzeichnet, dass** der Schritt des Veränderns in Abhängigkeit vom zweiten Datensatz angepasst wird.

4. Verwaltungsverfahren nach einem der Ansprüche 1 bis 3, **dadurch gekennzeichnet, dass** sich bei einer gegebenen Fahrgeschwindigkeit des Fahrzeugs mindestens der erste und der zweite Differenzdruck-Schwellenwert, gegebenenfalls der dritte Differenzdruck-Schwellenwert, in Abhängigkeit von der vom Fahrzeug eingenommenen Höhe steigend ändern.

5. Verwaltungsverfahren nach Anspruch 4, **dadurch gekennzeichnet, dass** sich bei einer gegebenen Fahrgeschwindigkeit des Fahrzeugs mindestens der erste und der zweite Differenzdruck-Schwellenwert, gegebenenfalls der dritte Differenzdruck-Schwellenwert, in steigenden Stufen ändern, wenn die vom Fahrzeug eingenommene Höhe zunimmt, wobei der Übergang zwischen zwei aufeinander folgenden Stufen bei vorbestimmten und in der elektronischen Steuereinheit gespeicherten Höhenschwellenwerten erfolgt.

6. Verwaltungsverfahren nach Anspruch 5, **dadurch gekennzeichnet, dass** bei jedem Höhenschwellenwert eine Hysterese ausgeführt wird, so dass:
- der Wechsel (F1) von einer Stufe (P2) zur nächstniedrigeren Stufe (P1) bei abnehmender Höhe zu dem Zeitpunkt angewandt wird, zu dem die vom Fahrzeug eingenommene Höhe geringer als der Höhenschwellenwert ist oder zu dem die Differenz zwischen dem Höhenschwellenwert und der vom Fahrzeug eingenommenen Höhe größer als ein erster vorbestimmter Wert (M1) wird,
- der Wechsel (F2) von einer Stufe (P1) zur nächsthöheren Stufe (P2) bei zunehmender Höhe zu dem Zeitpunkt angewandt wird, zu dem die vom Fahrzeug eingenommene Höhe größer als der Höhenschwellenwert ist oder zu dem die Differenz zwischen der vom Fahrzeug eingenommenen Höhe und dem Höhenschwellenwert größer als ein zweiter vorbestimmter Wert (M2) wird, der gegebenenfalls gleich dem ersten vorbestimmten Wert (M1) ist.

7. Verwaltungssystem für eine mit einem Bremssystem eines Fahrzeugs verbundene Vakuumpumpe, das eine elektronische Steuereinheit umfasst, die Hardware- und/oder Softwareelemente beinhaltet, die das Verwaltungsverfahren nach einem der vorhergehenden Ansprüche ausführen.

8. Verwaltungssystem nach Anspruch 7, **dadurch gekennzeichnet, dass** es ein Element zur Erkennung des Vorliegens oder Nichtvorliegens einer Situation mit wiederholter Bremsung umfasst, das der elektronischen Steuereinheit den ersten Datensatz bereitstellt, und/oder ein Element zur Bewertung der vom Fahrzeug eingenommenen Höhe, das der elektronischen Steuereinheit den zweiten Datensatz bereitstellt.

9. Kraftfahrzeug, umfassend ein Verwaltungssystem nach einem der Ansprüche 7 oder 8, eine einem Unterdruckvorrat zugeordnete und vom Verwaltungssystem verwaltete Vakuumpumpe, wobei die elektronische Steuereinheit mit der Vakuumpumpe so verbunden ist, dass sie die Vakuumpumpe einschaltet, wenn die Differenz zwischen dem Umgebungsdruck des Fahrzeugs und dem Druck des Unterdruckvorrats kleiner oder gleich dem von der elektronischen Steuereinheit bestimmten zweiten Differenzdruck-Schwellenwert ist, und den Betrieb der Vakuumpumpe stoppt, wenn die Differenz zwischen dem Umgebungsdruck des Fahrzeugs und dem Druck des Unterdruckvorrats größer oder gleich dem von der elektronischen Steuereinheit bestimmten ersten Differenzdruck-Schwellenwert ist.

## Claims

1. Method for managing a vacuum pump connected to a braking system of a motor vehicle, comprising:
- a step of using an electronic control unit connected to the vacuum pump,
- a step of determining at least two differential pressure thresholds associated with the vacuum pump: a first differential pressure threshold commanding the stoppage of operation of the vacuum pump, a second differential pressure threshold commanding the starting of the vacuum pump and, optionally, a third differential pressure threshold lower than the second threshold and signalling alerts representative of operating defects, while taking into account a first data set representative of detection or non-detection of a repetitive braking situation, and/or a second data set representative of the altitude of the vehicle, **characterized in that** it comprises:
- a step of modifying at least the first and second differential pressure thresholds, perhaps also the third differential pressure threshold, such that, at a given altitude, at least the first and second differential pressure thresholds, perhaps also the third differential pressure threshold, develop by incremental stages when the travel speed of the vehicle increases, the transition between two successive stages occurring at predefined speed thresholds stored in the electronic control unit.

2. Management method according to Claim 1, **characterized in that** said modification step is inhibited when the first data set is representative of detection of the presence of a repetitive braking situation, such that at least the first and second differential pressure thresholds, perhaps also the third differential pressure threshold, are held constant by the electronic control unit irrespective of the travel speed of the vehicle.

3. Management method according to either one of Claims 1 and 2, **characterized in that** said modification step is modulated as a function of the second data set.

4. Management method according to any one of Claims 1 to 3, **characterized in that**, at a given travel speed of the vehicle, at least the first and second differential pressure thresholds, perhaps also the third differential pressure threshold, develope incrementally as a function of the altitude of the vehicle.

5. Management method according to Claim 4, **characterized in that**, at a given travel speed of the vehicle, at least the first and second differential pressure thresholds, perhaps also the third differential pressure threshold, develop by incremental stages as the altitude of the vehicle increases, the transition between two successive stages occurring at predefined altitude thresholds stored in the electronic control unit.

6. Management method according to Claim 5, **characterized in that** at each altitude threshold, a hysteresis is implemented such that:
- the transition (F1) from one stage (P2) to the immediately lower stage (P1) as the altitude decreases is applied at the moment when the altitude of the vehicle is lower than said altitude threshold and when the difference between said altitude threshold and the altitude of the vehicle becomes greater than a first predefined value (M1),
- the transition (F2) from one stage (P1) to the immediately higher stage (P2) as the altitude increases is applied at the moment when the altitude of the vehicle is higher than said altitude threshold and when the difference between the altitude of the vehicle and said altitude threshold becomes greater than a second predefined value (M2), which may be equal to said first predefined value (M1).

7. System for managing a vacuum pump connected to a braking system of a vehicle, comprising an electronic control unit including hardware and/or software elements implementing the management method according to any one of the preceding claims.

8. Management system according to Claim 7, **characterized in that** it comprises an element for detecting the presence or absence of a repetitive braking situation supplying the electronic control unit with the first data set, and/or an element for assessing the altitude of the vehicle and supplying the electronic control unit with the second data set.

9. Motor vehicle comprising a management system according to either of Claim 7 and 8, a vacuum pump associated with a vacuum reserve and managed by the management system, the electronic control unit being connected to the vacuum pump so as to start the operation of the vacuum pump when the difference between the ambient pressure of the vehicle and the pressure of the vacuum reserve is less than or equal to the second differential pressure threshold determined by the electronic control unit, and to stop the operation of the vacuum pump when the difference between the ambient pressure of the vehicle and the pressure of the vacuum reserve is greater than or equal to the first differential pressure threshold determined by the electronic control unit.
